(19) Europäisches Patentamt
European Patent Office
Office européen des brevets

(11) **EP 2 608 553 A1**

(12) **EUROPEAN PATENT APPLICATION**
published in accordance with Art. 153(4) EPC

(43) Date of publication:
26.06.2013 Bulletin 2013/26

(21) Application number: 10856126.7

(22) Date of filing: 27.12.2010

(51) Int Cl.:
*H04N 13/02* (2006.01)     *G02B 7/28* (2006.01)
*G02B 7/30* (2006.01)      *G03B 17/18* (2006.01)
*G03B 35/08* (2006.01)

(86) International application number:
**PCT/JP2010/007556**

(87) International publication number:
**WO 2012/023168 (23.02.2012 Gazette 2012/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 19.08.2010 JP 2010183582

(71) Applicant: Panasonic Corporation
Osaka 571-8501 (JP)

(72) Inventors:
• **KISHIDA, Yuki**
  **Chuo-ku**
  **Osaka 540-6207 (JP)**
• **WADA, Noriaki**
  **Chuo-ku**
  **Osaka 540-6207 (JP)**

(74) Representative: **Eisenführ, Speiser & Partner**
**Postfach 10 60 78**
**28060 Bremen (DE)**

(54) **STEREOSCOPIC IMAGE CAPTURING DEVICE, AND STEREOSCOPIC IMAGE CAPTURING METHOD**

(57)  A stereoscopic image capturing apparatus which is capable of capturing a stereoscopic image including a left-eye image and a right-eye image. The stereoscopic image capturing apparatus includes: a stereoscopic image imaging unit including a first image capturing unit which is operable to capture the left-eye image and a second image capturing unit which is operable to capture the right-eye image; a display unit which is operable to display information; and a controller which is operable to control the stereoscopic image imaging unit and the display unit, in which: the controller derives a subject distance that satisfies a prescribed condition for parallax of a subject in the stereoscopic image based on information on a horizontal angle of view and a convergence angle of the stereoscopic image imaging unit; and the display unit displays information on the subject distance derived by the controller.

*Fig.1*

EP 2 608 553 A1

## Description

TECHNICAL FIELD

The technical field relates to a stereoscopic image capturing apparatus for capturing a stereoscopically viewable image (stereoscopic image) and, particularly, to a stereoscopic image capturing apparatus which is capable of notifying a subject distance suitable for capturing a stereoscopic image.

BACKGROUND ART

A stereoscopic image capturing apparatus which captures two images (a left-eye image and a right-eye image) to generate a stereoscopically viewable image (stereoscopic image) has been gathering attention. With such a stereoscopic image, there is parallax between a subject in the left-eye image and the identical subject in the right-eye image, corresponding to the parallax associated with the left and right eyes of a human. When displaying such a stereoscopic image, the left-eye image is presented to the left eye of an observer and, simultaneously, the right-eye image is presented to the right eye of the observer.

The angle formed between the optical axis of a left-eye image camera capturing the left-eye image and the optical axis of the right-eye image camera capturing the right-eye image is referred to as a convergence angle. Further, the plane which includes the point where the optical axes intersect with each other while forming the convergence angle and is in parallel to the installation interval between the cameras is referred to as a reference plane. A parallax in a stereoscopic image of a subject on the reference plane is zero, while a parallax in a stereoscopic image of a subject not on the reference plane has a magnitude and a direction corresponding to a distance and front or rear relationship between the subject and the reference plane. The sense of distance to the subject in the stereoscopic image that the observer of the stereoscopic image feels changes in accordance with the magnitude and the direction of the parallax of the subject.

Patent Literature 1 discloses a multi-lens imaging apparatus which is capable of capturing a stereoscopic image. The multi-lens imaging apparatus controls an optical image stabilization mechanism (lens shift method) included therein to change their optical axis of the optical systems. Thus, a plurality of stereoscopic images is successively captured while the convergence angle is variously changed. In this manner, the user is allowed to select the stereoscopic image having a stereoscopic sense accommodating to the user's own likings out of the plurality of stereoscopic images generated by the successive capture. As described above, it is widely known that means for changing the convergence angle of a stereoscopic image capturing apparatus can be realized using the optical image stabilization mechanism.

However, if a stereoscopic image includes a subject with extremely great parallax, an observer may feel a sense of discomfort from the stereoscopic image. Accordingly, in order for the stereoscopic image to be natural and comfortable for an observer, it is desirable that a stereoscopic image is generated with extremely great parallax not included therein.

Conventionally, at the site of capturing a stereoscopic image, images are captured while a convergence angle and a horizontal angle of view of the stereoscopic image capturing apparatus and a distance to subjects and the like are adjusted, so that the parallax of the subjects will not become extremely great in the stereoscopic image. Further, as the scheme for determining whether or not the parallax of the captured stereoscopic image is appropriate, a method for measuring a parallax of a stereoscopic image is known, in which parallaxes displayed on a monitor display are measured.

CITATION LIST

PATENT LITERATURE

PTL 1: JP 2010-103895 A

SUMMARY

TECHNICAL PROBLEM

However, in some cases, it is difficult to bring a large monitoring-purpose display into the site of capturing a stereoscopic image. In such cases, there are no means for determining, at the image capturing site, whether the parallax in the captured stereoscopic image is included in an appropriate range or not.

Further, a viewfinder with which the stereoscopic image capturing apparatus is equipped is usually a monitoring-purpose 2D display of which screen size is small, and it is difficult for a user, i.e., a person capturing the image, to check the magnitude of the parallax included in the stereoscopic image during the capturing operation.

As described above, it is very difficult to determine whether a captured stereoscopic image is natural and brings no discomfort or not at the image capturing site.

In consideration of the problems described above, what is provided is a stereoscopic image capturing apparatus which notifies the appropriate distance to the subject for capturing a stereoscopic image, that is, the distance to the subject by which parallax of an appropriate size is provided to the stereoscopic image.

SOLUTION TO PROBLEM

The first aspect provides a stereoscopic image capturing apparatus which is capable of capturing a stereoscopic image including a left-eye image and a right-eye image. The stereoscopic image capturing apparatus includes: a stereoscopic image imaging unit including a first image capturing unit which is operable to capture the left-eye image and a second image capturing unit which is operable to capture the right-eye image; a display unit which is operable to display information; and a controller which is operable to control the stereoscopic image imaging unit and the display unit, wherein: the controller derives a subject distance that satisfies a prescribed condition for parallax of a subject in the stereoscopic image based on information on a horizontal angle of view and a convergence angle of the stereoscopic image imaging unit; and the display unit displays information on the subject distance derived by the controller.

The second aspect provides a stereoscopic image capturing method in a stereoscopic image capturing, the stereoscopic image including a left-eye image and a right-eye image. The method includes: capturing the left-eye image and the right-eye image; deriving a subject distance that satisfies a prescribed condition for parallax of a subject in the stereoscopic image based on information on a horizontal angle of view and a convergence angle of a stereoscopic image imaging unit including a first image capturing unit capturing the left-eye image and a second image capturing unit capturing the right-eye image; and displaying information on the subject distance derived in the deriving.

ADVANTAGEOUS EFFECTS

The stereoscopic image capturing apparatus according to the embodiment can notify an appropriate distance to the subject for capturing a stereoscopic image.

BRIEF DESCRIPTION OF DRAWINGS

Fig. 1 is a block diagram of a stereoscopic image capturing apparatus of the present embodiment;
Fig. 2 is a block diagram showing a detailed structure of a first image capturing unit;
Fig. 3 is a schematic diagram describing the convergence angle and reference plane of the stereoscopic image capturing apparatus;
Fig. 4 is a schematic diagram describing parallax provided to subjects locating outside the reference plane;
Fig. 5 is a schematic diagram describing the relationship between the horizontal angle of view of the stereoscopic image capturing apparatus and the horizontal direction image range of a stereoscopic image;
Fig. 6 is a flowchart of the process performed by the stereoscopic image capturing apparatus of the present embodiment;
Fig. 7 is a display example of an appropriate subject distance range on a display unit;
Fig. 8 is a schematic diagram showing the relationship between a stereoscopic image display screen and a stereoscopic image observer;
Fig. 9 is a schematic diagram showing the relationship between the stereoscopic image display screen and the stereoscopic image observer;
Fig. 10 is a display example of the appropriate subject distance range on the display unit; and
Fig. 11 is a display example of the appropriate subject distance range on the display unit.

DESCRIPTION OF EMBODIMENTS

In the following, with reference to the accompanying drawings, a detailed description of a stereoscopic image capturing apparatus according to an embodiment will be given.

1. Overview

A stereoscopic image capturing apparatus according to the present embodiment is a stereoscopic image capturing apparatus provided with a display unit (e.g., a viewfinder), through which information can be provided. On the display unit, information on the subject distance appropriate for capturing a stereoscopic image can be displayed. As used herein, the subject distance refers to the distance from the stereoscopic image capturing apparatus to the subject. Further, the subject distance appropriate for capturing a stereoscopic image (an appropriate subject distance) refers to the subject distance with which the parallax of the subject in the stereoscopic image obtained by capturing satisfies prescribed conditions. The prescribed conditions are the conditions as to the parallax of the subject in the stereoscopic image, for the stereoscopic image obtained by capturing to be natural and to bring no discomfort. The conditions will be detailed later. It is to be noted that, the information on the appropriate subject distance may be information indicative of a sole distance, or may be information indicative of a range of the subject distance specified by two different distances.

Thus, the stereoscopic image capturing apparatus according to the present embodiment can display information on the subject distance appropriate for capturing a stereoscopic image (appropriate subject distance) in real time, while capturing the stereoscopic image. Accordingly, a user, e.g., a person who captures an image, can capture a stereoscopic image while referring to the information on the appropriate subject distance displayed on the display unit so as to constantly check the appropriate subject distance for capturing the stereoscopic image. Further, the user can adjust settings (settings such as the focal length (horizontal angle of view), the convergence angle and the like) of the stereoscopic image capturing apparatus while referring to the information on the appropriate subject distance displayed on the display unit so as to set them suitable for the subject. Therefore, the captured stereoscopic image being natural and bringing no discomfort can easily be obtained.

2. Structure

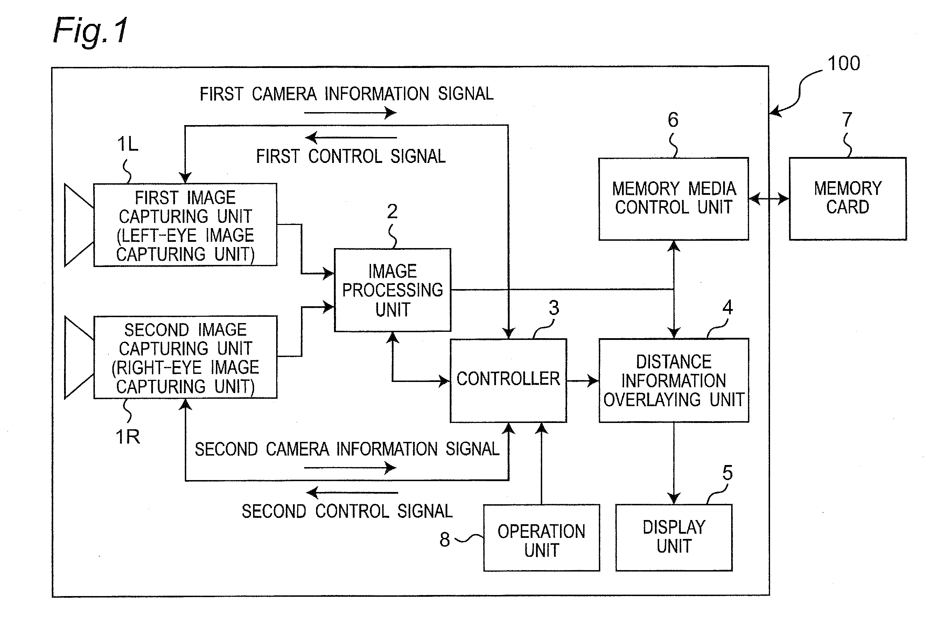

Fig. 1 is a block diagram of the structure of a stereoscopic image capturing apparatus 100 of the present embodiment. The stereoscopic image capturing apparatus 100 includes: a first image capturing unit 1L which captures a left-eye image; a second image capturing unit 1R which captures a right-eye image; an image processing unit 2; a controller 3; a distance information overlaying unit 4; a display unit 5; a memory media control unit 6; and an operation unit 8. A memory card 7 can be connected to the memory media control unit 6.

2-1. Imaging Unit

The stereoscopic image imaging unit (stereoscopic image imaging system) includes the first image capturing unit 1L and the second image capturing unit 1R. The first image capturing unit 1L and the second image capturing unit 1R are arranged with a prescribed interval. Generally, what is selected as the prescribed interval is approximately 65 mm, which is the interval between the eyes of the average adult. However, with the stereoscopic image capturing apparatus 100, the interval is not limited to such an interval. Further, the interval between the first image capturing unit 1L and the second image capturing unit 1R may be variable.

The left-eye image captured by the first image capturing unit 1L and the right-eye image captured by the second image capturing unit 1R are respectively sent to the image processing unit 2. The image processing unit 2 performs various image processing to the left-eye image and the right-eye image. The image processing unit 2 sends the left-eye image or the right-eye image to the distance information overlaying unit 4. Further, data of the left-eye image and the right-eye image having undergone the image processing is recorded on the memory card 7 via the memory media control unit 6. It is to be noted that the image processing unit 2 may send the combined image made up of the left-eye image and the right-eye image to the distance information overlaying unit 4. The stereoscopic image capturing apparatus 100 may be capable of capturing both still pictures and moving pictures.

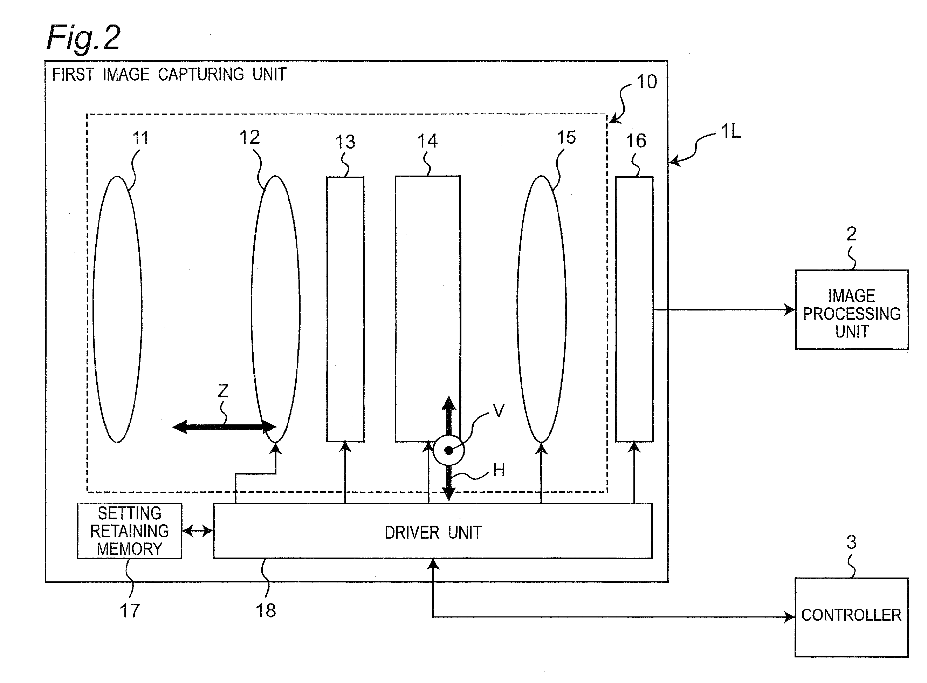

With reference to Fig. 2, a detailed description will be given of the structure of the first image capturing unit 1L. The first image capturing unit 1L includes a lens group (optical system 10) forming an image of a subject, an image pickup element 16 on which a subject image is formed by the optical system 10, a setting retaining memory 17 retaining a variety of pieces of setting information of the optical system 10, and a driver unit 18 driving and controlling an actuator (not shown) connected to each of lenses (11, 12, 14, 15) and a diaphragm 13 of the optical system 10 and the image pickup element 16 and the like.

2-1-1. Optical System

The optical system 10 includes an objective lens 11, a variable magnification lens 12 (a focal length changing unit), the diaphragm 13, an optical path correction lens 14 (a convergence angle changing unit), and a focus lens 15.

The objective lens 11 is the lens arranged nearest to the subject among the optical system 10.

By allowing the variable magnification lens (zoom lens) 12 to shift in the direction of arrow Z, the subject image formed on the image pickup element 16 can be enlarged or reduced. It is to be noted that the variable magnification lens 12 may be structured as a group of a plurality of lenses (variable magnification system).

The driver unit 18 can shift the variable magnification lens 12 in the direction of arrow Z by controlling the actuator for the variable magnification lens 12. The focal length of the optical system 10 is changed by the position of the variable magnification lens 12 being changed. Based on the focal length change instruction included in a first control signal sent from the controller 3, the driver unit 18 can change the position of the variable magnification lens 12, to thereby change the focal length of the optical system 10. By the focal length of the optical system 10 being changed, the horizontal angle of view of the optical system 10 changes.

The diaphragm 13 can adjust the size of an opening of the diaphragm 13 automatically or in accordance with the setting input by the user via the operation unit 8 or the like, to adjust the amount of transmitting light. The diaphragm 13 may include an ND filter or the like.

The optical path correction lens 14 is the lens that is shiftable in the horizontal direction H (the direction indicated by arrow H) and the vertical direction V (the direction V being perpendicular to the drawing). As used herein, the horizontal direction H and the vertical direction V may be included in a plane perpendicular to the optical axes of the objective lens 11, the variable magnification lens 12, the focus lens 15 and the like. The horizontal direction H is the direction which agrees with the horizontal direction in the stereoscopic image, and is the direction along the installation interval between the first image capturing unit 1L and the second image capturing unit 1R. The vertical direction V is the direction perpendicular to the horizontal direction H.

When the optical path correction lens 14 is located at the position other than a prescribed position (neutral position), it exhibits the action of deflecting the optical path of the light being incident from the objective lens 11 side to transmit the light to the focus lens 15 side. In other words, the optical path correction lens 14 is the optical system having the functionality of deflecting the optical axis of the optical system 10. By changing the horizontal direction position of the optical path correction lens 14, the horizontal direction component in the direction of the optical axis of the optical system 10 can be deflected. Further, by changing the position in the vertical direction V of the optical path correction lens 14, the vertical direction component in the direction of the optical axis of the optical system 10 can be deflected. It is to be noted that the optical path correction lens 14 is only required to be an optical element which can achieve the action equivalent to that achieved by the correction lens of the optical image stabilization mechanism of the lens shift method. Further, the optical path correction lens 14 may be structured by a plurality of lenses.

The driver unit 18 can shift the optical path correction lens 14 in the horizontal direction H and the vertical direction V by controlling the actuator for the optical path correction lens 14. The driver unit 18 can change (at least one of the vertical direction position and) the horizontal direction position of the optical path correction lens 14, based on the convergence angle change instruction included in the first control signal sent from the controller 3.

The focus lens 15 is an optical element which is capable of shifting along the optical axes of the objective lens 11, the variable magnification lens 12, the focus lens 15 and the like and which has the action of adjusting the focus of the subject image formed on the image pickup element 16. The focus lens 15 may be formed by a plurality of lenses.

2-1-2. Other Constituents

The image pickup element 16 captures a subject image formed by the optical system 10, to generate image data. The image pickup element 16 may be a solid state image pickup element such as a CCD image sensor or a CMOS image sensor. The image pickup element 16 may be of the single-chip type, or may be of the three-chip type in which an image pickup element is provided for each of R-, G-, and B-signals.

The driver unit 18 can drive and control the diaphragm 13, the focus lens 15, and the image pickup element 16, as well as the variable magnification lens 12 and the optical path correction lens 14.

The setting retaining memory 17 can store data that should be retained by the driver unit 18 even when the power supply is OFF. The setting retaining memory 17 can be implemented by flash memory, ferroelectric memory or the like. The data retained by the setting retaining memory 17 includes, for example, the information on the focal length at the time where the power supply is lastly turned OFF, the information on the convergence angle at the time where the power supply is lastly turned OFF and the like.

The second image capturing unit 1R may be structured substantially identically to the first image capturing unit 1L.

2-2. Image Processing Unit

The image processing unit 2 can perform the AD conversion, the image preprocess, and the image compression process. With the image preprocess, various camera signal processes such as gamma correction, white balance correction, flaw correction and the like are performed to the image data having undergone the AD conversion. With the image compression process, image data is compressed by DCT (discrete cosine transform), Huffman coding and the like being performed. With the image compression process, image data is compressed by the compression format conforming to the standards such as MPEG-2 or H.264, for example. It is to be noted that the compression scheme is not limited to the format such as MPEG-2 or H.264. The image processing unit 2 can be implemented by a DSP, a microcomputer or the like.

It is to be noted that, in the present embodiment, a description will be given of the manner in which left and right images respectively captured by the first image capturing unit 1L and the second image capturing unit 1R are processed by the single image processing unit 2, it is also possible to employ the manner in which two image processing unit 2 are provided, and the left-eye image captured by the first image capturing unit 1L and the right-eye image captured by the second image capturing unit 1R are processed by the separate image processing units, respectively.

2-3. Controller

The controller 3 is control means for controlling the stereoscopic image capturing apparatus 100 entirely. The controller 3 can be implemented by a semiconductor device such as a microcomputer. The controller 3 may be structured solely by hardware, or may be implemented by the combination of hardware and software. In the latter case, the software (computer program) may be factory-installed. Further, the software may be installed after the shipment from the factory. The software may be distributed as being stored in a memory medium such as a memory card. The software may be delivered via communication lines such as the Internet.

The controller 3 receives information on the setting of the first image capturing unit 1L or the like from the first image capturing unit 1L, as a first camera information signal. The first camera information signal may include, for example, information on the current focal length (or information on the current horizontal angle of view), information on the current convergence angle, information on the focal length at the time where the power supply is lastly turned OFF, the information on the convergence angle at the time where the power supply is lastly turned OFF and the like. The information on the focal length may be the positional information of the variable magnification lens 12. The information on the current focal length may be the information on the current horizontal angle of view. The information on the convergence angle may be the positional information on the optical path correction lens 14.

Further, the controller 3 sends a signal for driving and controlling the first image capturing unit 1L to the first image capturing unit 1L as the first control signal. The first control signal may include a focal length change instruction, a convergence angle change instruction and the like. The focal length change instruction may include a focal length change target value. The focal length target value may be the positional target value of the variable magnification lens 12. The convergence angle change instruction may include a convergence angle change target value. The convergence angle change target value may be the positional target value of the optical path correction lens.

It is to be noted that the controller 3 sends a second control signal and receives a second camera information signal to and from the second image capturing unit 1R in the similar manner.

Further, the controller 3 calculates a subject distance appropriate for capturing a stereoscopic image (appropriate subject distance), based on the imaging condition information (information on the focal length and the convergence angle of the first image capturing unit 1L and the second image capturing unit 1R, information on the installation interval between the image capturing units and the like), and the observation condition information (information such as the size of the screen and the screen aspect ratio of a stereoscopic image display apparatus expected to be used in displaying stereoscopic images (expected display apparatus), and the expected interval between the stereoscopic image display apparatus and the observer in displaying a stereoscopic image and the like).

The information on the appropriate subject distance calculated by the controller 3 is output to the distance information overlaying unit 4. It is to be noted that the controller 3 may output the information on the appropriate subject distance to the image processing unit 2.

2-4. Distance Information Overlaying Unit

The distance information overlaying unit 4 prepares a distance information layer for displaying the appropriate subject distance constructed with characters or graphics based on the information on the appropriate subject distance received from the controller 3, overlays the distance information layer on the image received from the image processing unit 2, and outputs the distance information overlaid image to the display unit 5. It is to be noted that the distance information overlaying unit 4 may be included in the image processing unit 2. In this case, the image processing unit 2 may receive the information on the appropriate subject distance from the controller 3, prepare the distance information layer based on the information, and output the distance information overlaid image to the display unit 5.

2-5. Display Unit

The display unit 5 displays the distance information overlaid image received from the distance information overlaying unit 4. The display unit 5 may be a viewfinder, a small LCD monitor display or the like. The display unit 5 may be, for example, a monitoring-purpose 2D display. It is to be noted that, the display unit 5 is not limited to the 2D display, and may be a display apparatus capable of displaying stereoscopic images.

2-6. Operation Unit

The operation unit 8 is the components generally referred to a variety of types of operation means. The operation unit 8 is so-called a user interface of the stereoscopic image capturing apparatus 100. The operation unit 8 includes a power supply button to turn ON/OFF the power supply to the stereoscopic image capturing apparatus 100, a zoom lever to perform the zoom operation, a convergence angle adjusting button and the like. That is, the operation unit 8 is the means for the user to instruct the stereoscopic image capturing apparatus 100 to change the imaging conditions (the focal length, the convergence angle of the first image capturing unit 1L and the second image capturing unit 1R and the like). The operation unit 8 receives a instruction from the user, and transmits the instruction to the controller 3. The user can instruct the stereoscopic image capturing apparatus 100 as to the focal length changing operation (a so-called zoom operation), the convergence angle changing operation or the like, by operating the operation unit 8.

Further, the operation unit 8 has means for inputting observation condition information (information such as the size of the screen and the screen aspect ratio of the stereoscopic image display apparatus expected to be used in displaying stereoscopic images (expected display apparatus), the expected interval between the stereoscopic image display apparatus and the observer in displaying stereoscopic images (expected observation distance) and the like) to the stereoscopic image capturing apparatus 100. The means may be structured with a button, a lever, a changeover switch and the like. The information on the size of the screen may be, for example, the diagonal length (unit: inches) of the screen of the expected display apparatus. The information on the screen aspect ratio may be the ratio between the vertical length and the horizontal length of the screen of the expected display apparatus. The information on the expected observation distance may be the information representing the expected interval between the expected display apparatus and the observer with an actual length (unit: meters). Alternatively, it may be information on the ratio between the expected interval between the expected display apparatus and the observer and the vertical length of the screen of the expected display apparatus. Further, the information on the screen size or the screen aspect ratio may be represented by the number of pixels structuring the screen and the ratio between the vertical length and horizontal length of one pixel.

2-7. Memory Media Control Unit and Memory Card

To the memory media control unit 6, the memory card 7 can removably be attached. The memory media control unit 6 can mechanically and electrically be connected to the memory card 7. The memory card 7 includes therein flash memory or ferroelectric memory, and is capable of storing data.

It is to be noted that, in the present embodiment, the description is given of the structure in which the memory card 7 is removably attached. However, the memory card 7 may be included in the stereoscopic image capturing apparatus 100. Further, in the present embodiment, though the description is given of the case in which the memory card 7 is used as the recording medium, the recording medium is not limited to the memory card, and may be an optical disc, a hard disk, a magnetic tape or the like.

It is to be noted that, in the present embodiment, the description is given of the manner in which both the left-eye image captured by the first image capturing unit 1L and the right-eye image captured by the second image capturing unit 1R are recorded on one identical memory card 7. However, a plurality of memory cards 7 may be connected to the memory media control unit 6, and the left-eye image captured by the first image capturing unit 1L and the right-eye image captured by the second image capturing unit 1R may be recorded on separate memory cards, respectively.

3. Operation

A description will be given of displaying operation of the appropriate subject distance information with the stereoscopic image capturing apparatus 100 of the present embodiment.

3-1. Shifting Reference Plane by Changing Convergence Angle

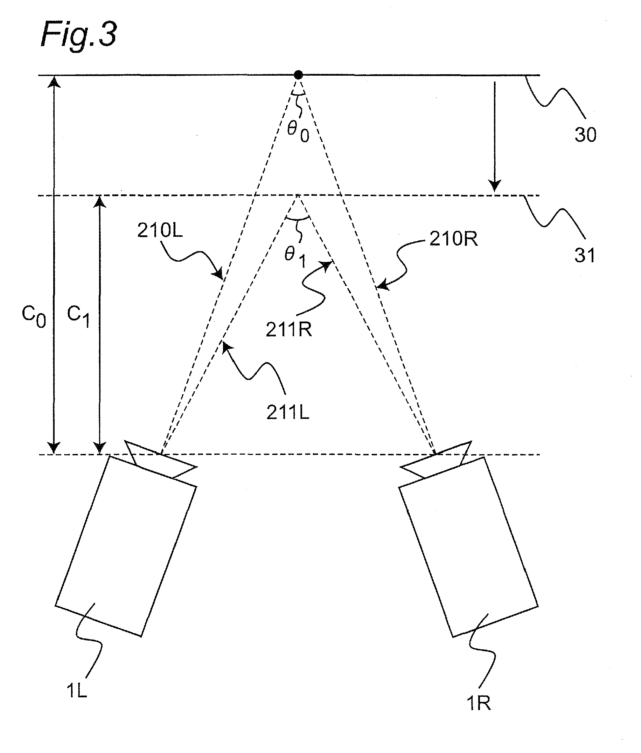

As described above, the stereoscopic image capturing apparatus 100 has the optical path correction lens 14 as the convergence angle changing means. Here, with reference to Fig. 3, a description will be given of the change in the reference plane before and after the convergence angle changing operation. As described above, in connection with an arbitrary subject, the parallax in the stereoscopic image is determined in accordance with the positional relationship between the reference plane and the subject. Accordingly, when the reference plane changes by the change in the convergence angle of the stereoscopic image capturing apparatus 100, the parallax of the subject in the stereoscopic image also changes.

Fig. 3 is a schematic diagram showing an arrangement of the first image capturing unit 1L and the second image capturing unit 1R, and a relationship between the convergence angle and the reference plane. In Fig. 3, the stereoscopic image capturing apparatus 100 is depicted as seen from above. In Fig. 3, when the horizontal direction position of the optical path correction lens 14 of the optical system 10 is at its neutral position, the optical axis of the first image capturing unit 1L is an optical axis 210L; and similarly, the optical axis of the second image capturing unit 1R is an optical axis 210R. Here, the neutral position is the position of the optical path correction lens 14 where the degree of the optical path deflecting effect exhibited by the optical path correction lens 14 becomes zero, as has been described above.

When the optical path correction lens 14 is at its neutral position, the optical axis 210L and the optical axis 210R cross each other at a point on a plane 30. Here, the plane 30 becomes the reference plane of the stereoscopic image capturing apparatus 100. As shown in the drawing, the convergence angle of the stereoscopic image capturing apparatus 100 at this timing is $\theta_0$, and the reference plane 30 is at the position being away from the first image capturing unit 1L and the second image capturing unit 1R by approximately $C_0$.

When the optical path correction lens 14 shifts to a position other than the neutral position, the optical path correction lens 14 deflects the orientation of the optical axis 210L (and the optical axis 210R). The optical axis of the first image capturing unit 1L having undergone the optical axis deflecting effect by the optical path correction lens 14 is defined as an optical axis 211L; and the optical axis of the second image capturing unit 1R is defined as an optical axis 211R. As shown in the drawing, the convergence angle of the stereoscopic image capturing apparatus 100 changes to $\theta_1$, and the reference plane also changes from the plane 30 to a plane 31. The reference plane 31 is at the position being away from the first image capturing unit 1L and the second image capturing unit 1R approximately by $C_1$.

In this manner, with the stereoscopic image capturing apparatus 100, by controlling the position of the optical path correction lens 14, the optical axis of the optical system 10 is deflected, whereby the convergence angle and the reference plane can be changed. It is to be noted that the optical path correction lens 14 of the first image capturing unit 1L and the optical path correction lens of the second image capturing unit 1R are driven in the opposite directions with reference to the horizontal direction.

3-2. Appropriate Subject Distance

Now, a description will be given of a method of deriving the appropriate subject distance. It is to be noted that, while the example of deriving the appropriate subject distance is shown adhering to the guidelines ("3DC Safety Guidelines") presented by the 3D Consortium (3D Consortium, URL: "http://www.3dc.gr.jp/jp/index.html"), the method of deriving the appropriate subject distance in the stereoscopic image capturing apparatus 100 according to the present embodiment is not limited to the present example.

3-2-1. 3DC Safety Guidelines

3D Consortium is an organization established in March, 2003. This organization aims at promoting dissemination of three-dimensional stereoscopic display of images. As a part of the promotion, one of the objects of the 3D Consortium is to unite the technical specifications of the three-dimensional stereoscopic display. The 3D Consortium presents the safety guidelines as to the stereoscopic images ("3DC Safety Guidelines"). According to the guidelines, comfortable stereoscopic images can be captured when the following conditions are satisfied.

Condition (1): The parallax displayed on the screen does not exceed 2.9% of the horizontal screen size.
Condition (2): Regarding retracted images, the parallax displayed on the screen is 50 mm or less.

Here, the parallax being displayed on the screen in the retracted stereoscopic image is defined to be 50 mm or less because approximately 50 mm is assumed as the interval between the eyes of children. That is, when the parallax displayed on the screen exceeds 50 mm, the eyes of children both are lead to turn outward. This makes it impossible for stereoscopic fusion to be achieved, and turns out to be an uncomfortable image.

3-2-2. Subject Distance Satisfying Condition (1)

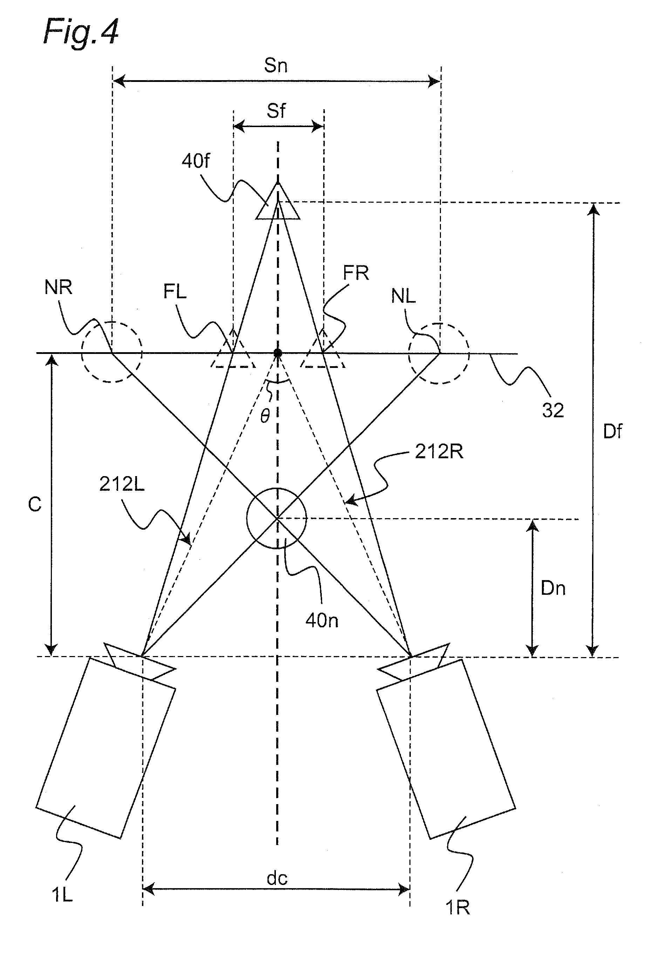

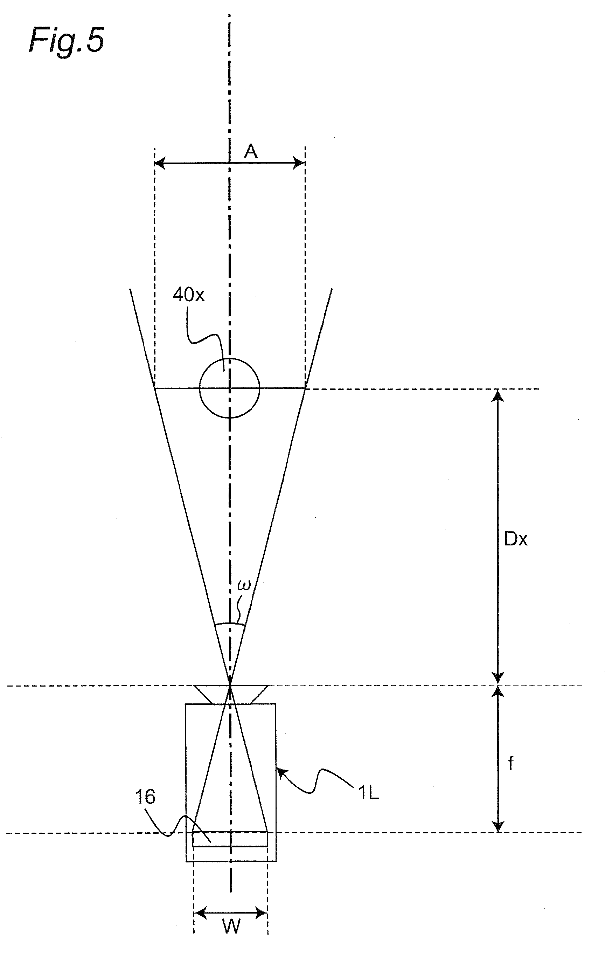

Firstly, with reference to Figs. 4 and 5, a description will be given of the method of deriving the subject distance which satisfies Condition (1) "The parallax displayed on the screen does not exceed 2.9% of the horizontal screen size". Fig. 4 is a schematic diagram describing parallax provided to subjects. Fig. 5 is a schematic diagram for describing the relationship between the horizontal angle of view of the stereoscopic image capturing apparatus and the horizontal direction image range of the stereoscopic image.

As to the positional relationship between a subject and the reference plane, every subject can be classified into any of the following three items:

a) Subjects positioned between the stereoscopic image capturing apparatus 100 and the reference plane (near-position subjects).

b) Subjects positioned farther than the reference plane with reference to the stereoscopic image capturing apparatus 100 (far-position subjects).

c) Subjects positioned on the reference plane (reference-position subjects).

As to the near-position subject of a) and the far-position subject of b), the parallax of the stereoscopic image becomes non-zero, and the magnitude thereof increases in accordance with the distance from the reference plane. Further, the parallax of the near-position subject and the parallax of the far-position subject in the stereoscopic image are oriented in the directions opposite to each other. As to the reference-position subject of c), the parallax of the stereoscopic image is zero.

3-2-2a. The Subject Distance Satisfying Condition (1) (with a near-position subject)

With reference to Fig. 4, the first image capturing unit 1L and the second image capturing unit 1R of the stereoscopic image capturing apparatus 100, a near-position subject 40n, a far-position subject 40f, and the reference plane 32 are schematically shown. Here, it is defined that the convergence angle of the stereoscopic image capturing apparatus 100 is $\theta$, and the reference plane 32 with the convergence angle $\theta$ is at the position being away by a distance C from the first image capturing unit 1L and the second image capturing unit 1R. Further, it is defined that the installation interval between the first image capturing unit 1L and the second image capturing unit 1R is dc. It is to be noted that the convergence angle $\theta$ and the installation interval dc are known. The installation interval dc may variably be controllable.

Here, distance C from the stereoscopic image capturing apparatus 100 to the reference plane 32 is obtained by the following equation.
[Math. 1]

$$C = \frac{d_c}{2 \tan \dfrac{\theta}{2}} \qquad \cdots (1)$$

On the other hand, distance Dn from the stereoscopic image capturing apparatus 100 to the near-position subject 40n can be obtained as follows.

The straight line passing through the first image capturing unit 1L and the near-position subject 40n crosses the reference plane 32 at point NL. Similarly, the straight line passing through the second image capturing unit 1R and the near-position subject 40n crosses reference plane 32 at point NR. The similarity relationship between the triangle having the height (C-Dn) and whose length of the base is Sn and the triangle having the height Dn and whose length of the base is dc is as follows.
[Math. 2]

$$S_n : d_c = (C - D_n) : D_n \qquad \cdots (2)$$

From the aforementioned similarity relationship, the distance Dn from the stereoscopic image capturing apparatus 100 to the near-position subject 40n can be expressed as follows.
[Math. 3]

$$D_n = \frac{d_c C}{S_n + d_c} \qquad \cdots (3)$$

As used herein, Sn is referred to as the near point parallax.

Next, with reference to Fig. 5, a description will be given of the relationship between the horizontal angle of view of the first image capturing unit 1L and the second image capturing unit 1R of the stereoscopic image capturing apparatus 100 and the horizontal direction image range of the stereoscopic image. Fig. 5 shows the relationship between horizontal angle of view ω of the first image capturing unit 1L and the horizontal direction image range of the captured image. While a description as to the second image capturing unit 1R is not given, it is to be understood that the relationship similar to that shown in Fig. 5 is likewise established with the second image capturing unit 1R.

Here, the focal length of the optical system 10 of the first image capturing unit 1L is defined as f, and the horizontal direction effective range length of the image pickup element 16 is defined as W. Generally, the horizontal angle of view ω of the first image capturing unit 1L is determined in accordance with the focal length f and the effective range length W. Here, it is defined that the effective range length W is great enough to receive all the light being incident on the optical system 10. Here, the horizontal angle of view ω of the first image capturing unit 1L is determined in accordance with the focal length f. However, even in the case where the effective range length W is not great enough to receive all the light being incident on the optical system 10, it is possible to determine the horizontal angle of view ω.

In the case where a subject 40x being away from the first image capturing unit 1L by a distance Dx is captured, the horizontal direction image range A of the captured image is expressed as follows, using the horizontal angle of view ω.
[Math. 4]

$$A\big|_{Dx} = 2D_x \tan\frac{\omega}{2} \qquad \cdots (4)$$

Accordingly, as to the near-position subject 40n, using the near point parallax Sn and the horizontal direction image range A as to the distance C, Condition (1) can be expressed as follows.
[Math. 5]

$$\frac{S_n}{A\big|_C} \times 100 \le 2.9 \qquad \cdots (5)$$

Hence, as to the near point parallax Sn, Condition (1) can be expressed as follows.
[Math. 6]

$$S_n \le 0.029 \times 2C \tan\frac{\omega}{2} \qquad \cdots (6)$$

From Equation (3), as the distance Dn to the near-position subject 40n becomes smaller, the near point parallax Sn monotonously increases. Accordingly, the minimum value (nearest appropriate subject distance) $D_N$ of the near-position subject distance Dn satisfying Condition (1) can be obtained from the following.
[Math. 7]

$$D_N = \frac{d_c C}{0.029 \times 2C \tan\frac{\omega}{2} + d_c} \qquad \cdots (7)$$

3-2-2b. The Subject Distance Satisfying Condition (1) (with a far-position subject)

In the similar manner, a description will be given of the method of deriving the subject distance satisfying Condition (1) as to a distance Df (Fig. 4) to the far-position subject 40f.

Similarly to the derivation of Equation (2), from the similarity relationship between the triangle having the height (Df-C) and whose length of the base is Sf and the triangle having the height Df and whose length of the base is dc;
[Math. 8]

$$S_f : d_c = \left(D_f - C\right) : D_f \qquad \cdots (8)$$

the distance Df from the stereoscopic image capturing apparatus 100 to the far-position subject 40f can be expressed as follows.
[Math. 9]

$$D_f = \frac{d_c C}{d_c - S_f} \qquad \cdots (9)$$

As used herein, Sf is referred to as the far point parallax Sf.

Similarly to the derivation of Inequality (5), using the far point parallax Sf and the horizontal direction image range A as to the distance C, Condition (1) can be expressed as follows.
[Math. 10]

$$\frac{S_f}{A\big|_C} \times 100 \le 2.9 \qquad \cdots (10)$$

Hence, as to the far point parallax Sf, Condition (1) can be expressed as follows.
[Math. 11]

$$S_f \le 0.029 \times 2C \tan \frac{\omega}{2} \qquad \cdots (11)$$

From Equation (9), as the distance Df to the far-position subject 40f increases, the far point parallax Sf monotonously increases. Therefore, the maximum value (farthest appropriate subject distance) $D_{F1}$ of the far-position subject distance Df satisfying Condition (1) can be obtained by the following.
[Math. 12]

$$D_{F1} = \frac{d_c C}{d_c - 0.029 \times 2C \tan \dfrac{\omega}{2}} \qquad \cdots (12)$$

3-2-3. The Subject Distance Satisfying Condition (2)

Next, a description will be given of the method of deriving the subject distance which satisfies Condition (2) "The parallax displayed on the screen is 50 mm or less, in connection with a retracted image". Condition (2) defines the actual value of the parallax on the screen where a stereoscopic image is displayed. Accordingly, in the following, the horizontal direction size H (unit: millimeters) of the screen displaying a stereoscopic image is introduced as the parameter of the subject distance.

In the case where a stereoscopic image of the far-position subject 40f is displayed on the screen having the horizontal direction size H, from the following;
[Math. 13]

$$H : A\big|_C = S_{fa} : S_f \qquad \cdots(13)$$

the actual value on the screen Sfa on the far point parallax Sf can be expressed as follows.
[Math. 14]

$$S_{fa} = \frac{H S_f}{A\big|_C} \qquad \cdots(14)$$

From Equation (9), the far point parallax Sf is as follows.
[Math. 15]

$$S_f = \frac{d_c (D_f - C)}{D_f} \qquad \cdots(15)$$

Therefore, the actual value on the screen Sfa of the far point parallax Sf is expressed as follows.
[Math. 16]

$$S_{fa} = \frac{H d_c (D_f - C)}{2 C D_f \tan\dfrac{\omega}{2}} \qquad \cdots(16)$$

Substituting Equation (16) into Condition (2) "Sfa $\leq$ 50 (mm)", and solving for the far-position subject distance Df, the following is obtained.
[Math. 17]

$$D_f \leq \frac{H d_c C}{H d_c - 0.1 C \tan\dfrac{\omega}{2}} \qquad \cdots(17)$$

Hence, the maximum value (farthest appropriate subject distance)$D_{F2}$ of the far-position subject distance Df satisfying Condition (2) is obtained as follows, from Inequality (17).
[Math. 18]

$$D_{F2} = \frac{H d_c C}{H d_c - 0.1 C \tan\dfrac{\omega}{2}} \qquad \cdots(18)$$

3-2-4. Subject Distance Simultaneously Satisfying Both Conditions (1) and (2)

For example, the horizontal screen size of the display apparatus whose screen aspect ratio is 16:9 and screen size is 77 inches is 1.704 meters. In this case, "2.9% of the horizontal screen size" as stated in Condition (1) is 1.704 (meters) x 0.029 x 1000 = 49.5 (millimeters).

On the other hand, the horizontal screen size of the display apparatus whose screen aspect ratio is 16:9 and screen size is 78 inches is 1.727 meters. In this case, "2.9% of the horizontal screen size" as stated in Condition (1) is 1.727 (meters) x 0.029 x 1000 = 50.08 (millimeters).

As described above, with the display apparatus whose screen aspect ratio is 16:9, when the screen size is 77 inches or less, if the stereoscopic image satisfies Condition (1), then Condition (2) also is always satisfied. That is, Condition (1) is the sufficient condition for Condition (2). However, with the display apparatus whose screen aspect ratio is 16:9, when the screen size is 78 inches or more, the relationship between Condition (1) and Condition (2) is inverted, and Condition (2) becomes the sufficient condition for Condition (1).

From the foregoing, the subject distance range (appropriate subject distance range) $D_{tol}$ satisfying both Conditions (1) and (2) with the display apparatus whose screen aspect ratio is 16:9 is as follows. When the screen size is 77 inches or less: the range which satisfies Equations (7) and (12). When the screen size is 78 inches or more (i.e., greater than 77 inches): the range which satisfies Equations (7) and (18). Hence, the following is established.

[Math. 19]

$$\frac{d_c C}{0.029 \times 2C \tan\frac{\omega}{2} + d_c} \le D_{tol} \le \frac{d_c C}{d_c - 0.029 \times 2C \tan\frac{\omega}{2}}$$

$$(\text{when } (16:9),\ 77 \text{ inches or less}) \cdots (19)$$

[Math. 20]

$$\frac{d_c C}{0.029 \times 2C \tan\frac{\omega}{2} + d_c} \le D_{tol} \le \frac{H d_c C}{H d_c - 0.1C \tan\frac{\omega}{2}}$$

$$(\text{when } (16:9),\ \text{greater than } 77 \text{ inches}) \cdots (20)$$

3-3. Display Process of Appropriate Subject Distance Information

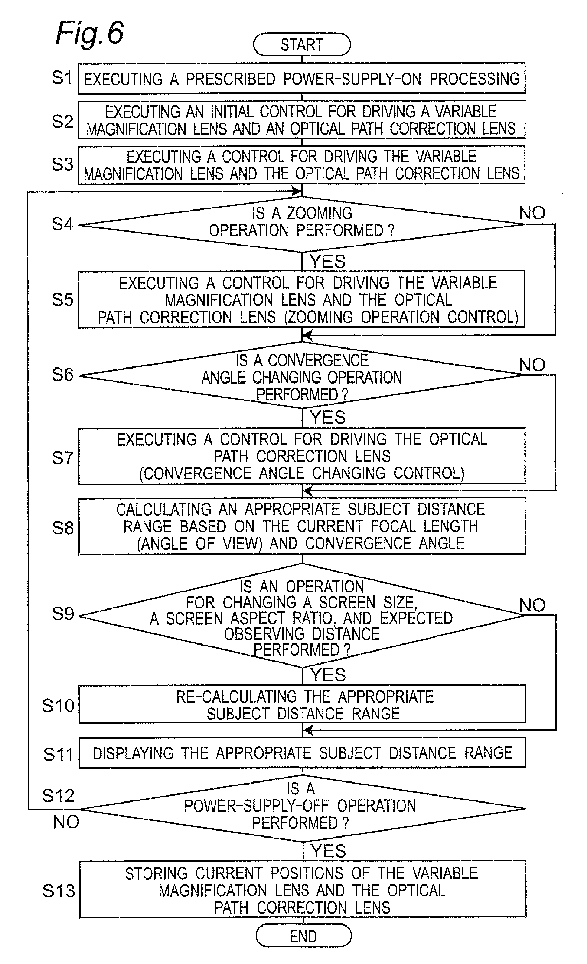

Fig. 6 is a flowchart of the process relating to displaying the appropriate subject distance information. With reference to the flowchart of Fig. 6, a description will be given of the display process of the appropriate subject distance information performed by the stereoscopic image capturing apparatus 100.

When the user turns ON the power supply to the stereoscopic image capturing apparatus 100 by operating the operation unit 8, the stereoscopic image capturing apparatus 100 performs a prescribed power-supply-ON mode process (S1). At this time, the controller 3 sends, to the driver unit 18 of the first image capturing unit 1L and the second image capturing unit 1R, an instruction of recovering the focal length and the convergence angle of the optical system 10 to the state at the time where the power supply is lastly turned OFF (S2).

The driver unit 18 of each of the first image capturing unit 1L and the second image capturing unit 1R having received the instruction acquires, from the setting retaining memory 17 of each of the first image capturing unit 1L and the second image capturing unit 1R, the information for specifying the focal length at the time where the power supply is lastly turned OFF (e.g., the positional information of the variable magnification lens 12), and the information for specifying the convergence angle at the time where the power supply is lastly turned OFF (e.g., the positional information of the optical path correction lens 14). Further, the driver unit 18 exerts control to drive the variable magnification lens 12 and the optical path correction lens 14 so that the focal length and the convergence angle of the optical system 10 return to the state at the time where the power supply is lastly turned OFF (S3).

When the user inputs an instruction to change the focal length f via the operation unit 8 ("YES" in Step S4), the controller 3 transmits an instruction to the driver unit 18 of the optical system 10 to change the position of the variable magnification lens 12. At this time, the controller 3 may transmit an instruction to the driver unit 18 of the optical system 10 to change the position of the optical path correction lens 14 so that the convergence angle $\theta$ of the optical system 10 is maintained constantly (S5).

Further, when the user inputs an instruction to change the convergence angle $\theta$ via the operation unit 8 ("YES" in Step S6), the controller 3 transmits an instruction to change the position of the optical path correction lens 14 to the driver unit 18 of the optical system 10 (S7).

The controller 3 specifies the changed, i.e., the current focal length f and the current convergence angle $\theta$. The specifying operation may be performed based on the content instructed from the controller 3 to the driver unit 18 in Steps S5 and S7. Alternatively, the specifying operation may be performed based on the imaging condition information received from the driver unit 18 (the information such as the focal length, the convergence angle of the first image capturing unit 1L and the second image capturing unit 1R and the like). Then, based on the current convergence angle $\theta$ and horizontal angle of view $\omega$, the controller 3 calculates the range of the appropriate subject distance from Inequalities (19) and (20) (S8).

Further, the controller 3 may previously include the observation condition information (the information such as the size of the screen and the screen aspect ratio of the stereoscopic image display apparatus expected to be used in displaying stereoscopic images (expected display apparatus), the interval between the stereoscopic image display apparatus and the observer expected in displaying stereoscopic images and the like). Further, via the operation unit 8, the user can input to change at least part of the content of the observation condition information. For example, the user can operate the operation unit 8 to change over the screen size of the expected display apparatus between 77 inches or less and 78 inches or more (i.e., greater than 77 inches). In this case, based on the information as to the size of the screen of the expected display apparatus included in the observation condition information, the controller 3 may calculate the range of the appropriate subject distance using solely one of Inequalities (19) and (20).

The controller 3 determines whether or not any input to change at least part of the content of the observation condition information is given from the user via the operation unit 8 (S9).

When there is any input to change the observation condition information ("YES" in Step S9), the controller 3 re-calculates the appropriate subject distance range based on the current imaging condition information and the changed observation condition information (S10).

The controller 3 outputs the information on the appropriate subject distance obtained on Step S8 or S11 to the distance information overlaying unit 4. The distance information overlaying unit 4 prepares a distance information layer structured by characters or graphics for displaying the appropriate subject distance, based on the information on the appropriate subject distance received from the controller 3, overlays the distance information layer on the image received from the image processing unit 2, and outputs the distance information overlaid image to the display unit 5 (S11).

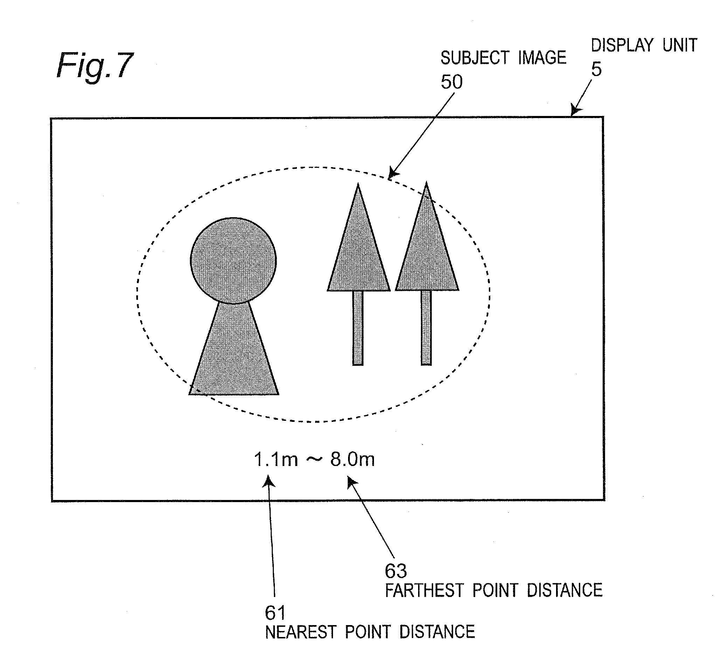

Fig. 7 is a diagram of the exemplary distance information overlaid image displayed on the display unit 5. In this manner, what is displayed on the display unit 5 is the distance information overlaid image in which the distance information layer including the information on the appropriate subject distance range (the nearest point distance 61 and the farthest point distance 63) is overlaid on the left-eye image, the right-eye image, or the combined image thereof. The nearest point distance 61 herein may be the nearest appropriate subject distance $D_N$ derived from Equation (7). The farthest point distance 63 may be the farthest appropriate subject distance $D_{F1}$ derived from the Equation (12) or the farthest appropriate subject distance $D_{F2}$ derived from Equation (18). Which one of $D_{F1}$ and $D_{F2}$ should be displayed as the farthest point distance 63 may be determined by the controller 3 in accordance with the size of the screen of the expected display apparatus currently set.

It is to be noted that, though Fig. 7 shows the example in which "the nearest point subject distance (m) to the farthest point subject distance (m)" is displayed on the bottom part of the display unit 5, the place where the appropriate subject distance range is shown is not limited thereto. The display place may be the top part or side part of the display unit 5.

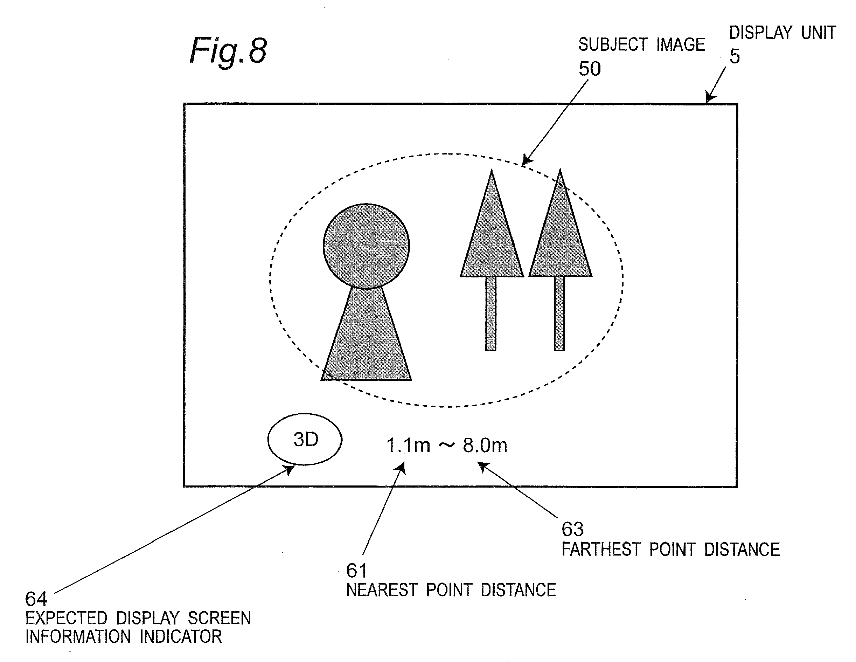

Fig. 8 is a diagram showing another exemplary distance information overlaid image displayed on the display unit 5. Similarly to the example shown in Fig. 7, in the present example, the information on the appropriate subject distance range is displayed with the nearest point distance 61 and the farthest point distance 63. Further, in the present example, an expected display screen information indicator 64 is displayed. The expected display screen information indicator 64 is the identifier marker for notifying the user of the observation condition information (information such as the size of the screen of the expected display apparatus, the screen aspect ratio of the expected display apparatus, the expected interval between the stereoscopic image display apparatus and the observer in displaying stereoscopic images), currently set to the stereoscopic image capturing apparatus 100. For example, the controller 3 selectively displays the expected display screen information indicator 64 being the characters "3D" in different colors between the case in which the size of 77 inches or less is set as the size of the screen of the expected display apparatus and the case in which the size greater than 77 inches (78 inches or more) is set. For example, in the case where 77 inches is set as the size of the screen of the expected display apparatus, the controller 3 displays "3D" in white characters on the display unit 5 as the expected display screen information indicator 64; in the case where 200 inches is set as the size of the screen of the expected display apparatus, the controller 3 displays "3D" in green characters on the display unit 5 as the expected display screen information indicator 64. In addition, the controller 3 may use any character string other than "3D" as the indicator 64, or may change over between flashing and continuous lighting of the character string.

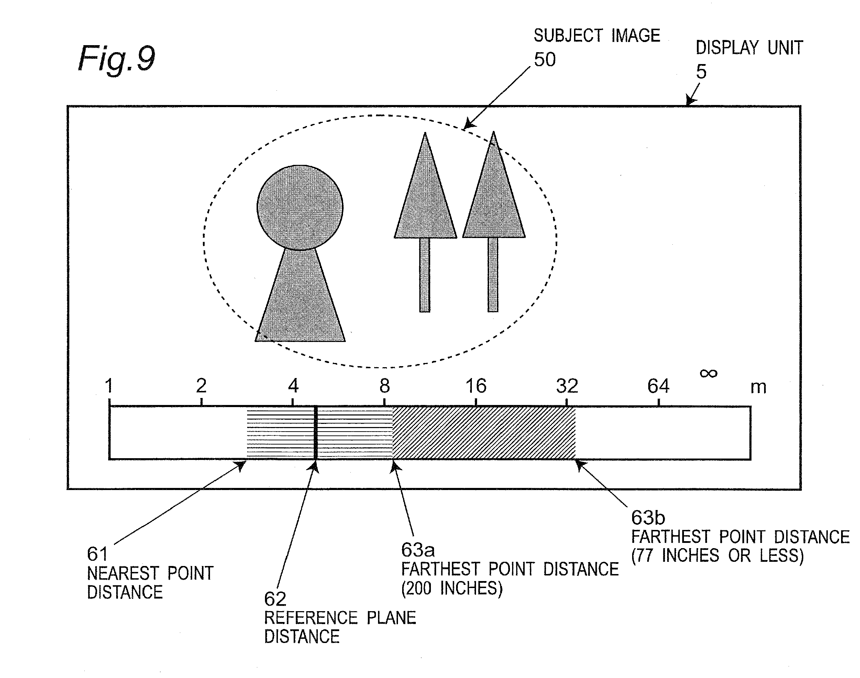

Fig. 9 is a diagram showing still another example of the distance information overlaid image displayed on the display unit 5. In the present example, using a bar-shaped graphic, the farthest point subject distance (farthest point distance 63a) in the case where 200 inches is set as the size of the screen of the expected display apparatus, and the farthest point subject distance (farthest point distance 63b) in the case where 77 inches is set are simultaneously displayed. Further, in the present example, the current position of the reference plane (reference plane distance 62) is also displayed.

As has been described above, with the stereoscopic image capturing apparatus 100 according to the present embodiment, the user can easily recognize the subject distance range appropriate for making the stereoscopic image natural and bringing no discomfort via the display unit 5, together with the monitoring image of the stereoscopic image being captured.

Referring again to Fig. 6, when the user operates to turn OFF the power supply using the operation unit 8 ("YES" in Step S12), the stereoscopic image capturing apparatus 100 performs a power-supply-OFF process. When the power supply is turned OFF, the driver unit 18 of the stereoscopic image capturing apparatus 100 stores the position of the current variable magnification lens 12 and that of the optical path correction lens 14 in the setting retaining memory 17, and thereafter turns OFF the power supply (S13).

3-3-1. Relationship between Condition (1) and Screen Aspect Ratio and Stereoscopic Image Observation Distance

As described above, the "3DC Safety Guidelines" states that, when following two conditions are satisfied, a comfortable stereoscopic image can be captured:

Condition (1): The parallax displayed on the screen does not exceed 2.9% of the horizontal screen size.
Condition (2): In connection with retracted images, the parallax displayed on the screen is 50 mm or less.

In the present embodiment, of the two conditions above, Condition (1) is reflected in derivation of the appropriate subject distance as Equations (7) and (12).

Here, Condition (1) is the condition derived from the condition that "the parallax angle is one degree or less", based on the expectation that the observer observes a stereoscopic image displayed on the screen whose screen aspect ratio is 16:9 at the position being away from the screen by the distance three times as great as the height of the screen. It is to be noted that "three times as great as the height of the screen" is based on the 3DC Safety Guidelines.

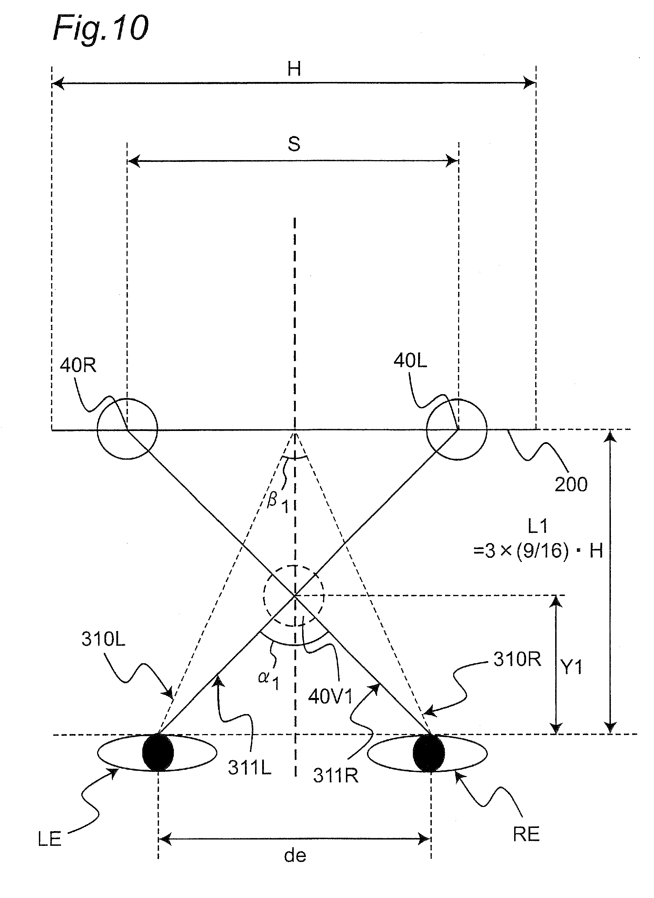

Fig. 10 is a schematic diagram showing the condition where the observer observes stereoscopic images displayed on the screen whose screen aspect ratio is 16:9 at the position being away from the screen by the distance three times as great as the height of the screen. With reference to Fig. 10, a description will be given of the "parallax angle".

The observer observes the screen 200 whose screen aspect ratio is 16:9 and whose horizontal size is H at the position being away from the screen 200 by a distance $L_1$ which is three times as great as the height of the screen. On the screen 200, a left eye-use subject image 40L and a right eye-use subject image 40R having parallax S are displayed. The observer observes the subject image 40L with the left eye LE, and observes the subject image 40R with the right eye RE, which is away by an interval de (e.g., 65 mm). Here, the angle formed between the lines of sight 311L and 311R of the observer is defined as $\alpha_1$. Further, the angle formed by the lines of sight of the observer crossing at the central part of the screen 200 is defined as $\beta_1$.

Here, the "parallax angle" is expressed by $|\alpha_1 - \beta_1|$.

The appropriate subject distance range expressed by Equations (7) and (12) is the subject distance range which satisfies the condition "the parallax angle is one degree or less when the observer observes a stereoscopic image displayed on the screen whose screen aspect ratio is 16:9 at the position being away from the screen by the distance three times as great as the height of the screen". That is, the appropriate subject distance range expressed by Equations (7) and (12) is the subject distance range satisfying the condition that the $|\alpha_1 - \beta_1|$ shown in Fig. 10 is one degree or less.

Accordingly, Condition (1), that is, the condition expressed by Equations (7) and (12) is modified as appropriate in accordance with the aspect ratio of the screen of the display apparatus used in displaying the stereoscopic image to be captured (expected display apparatus) and the expected interval (expected observation distance) between the expected display apparatus in displaying the stereoscopic images and the observer.

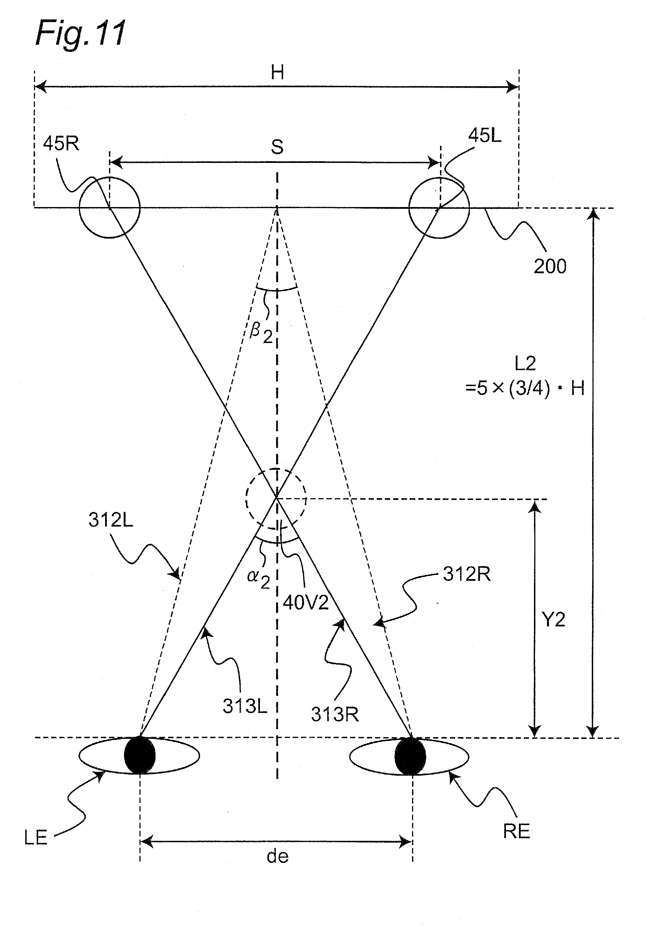

Fig. 11 is a schematic diagram showing the situation where the observer observes the stereoscopic image displayed on the screen whose screen aspect ratio is 4:3 at the position being away from the screen by the distance five times as great as the height of the screen.

Here, the angle $\alpha_2$ (radian) can be expressed from the similarity relationship of, e.g., a triangle whose base is de and whose height is $Y_2$ and a triangle whose base is (de + S), which is formed by extending downward an auxiliary line being parallel to the line of sight 313R from the point 45L, and whose height is $L_2$, as follows.
[Math. 21]

$$\alpha_2 \approx \frac{d_e}{Y_2} = \frac{S + d_e}{L_2} \qquad \cdots(21)$$

Further, the angle $\beta_2$ (radian) can be expressed as follows.
[Math. 22]

$$\beta_2 \approx \frac{d_e}{L_2} \qquad \cdots(22)$$

Here, the condition "the parallax angle is one degree or less" can be expressed as follows.
[Math. 23]

$$\left| \alpha_2 - \beta_2 \right| \approx \frac{S}{L_2} \leq \frac{\pi}{180} \qquad \cdots(23)$$

It is to be noted that, as the relationship between $L_2$ and horizontal screen size H, the following relationship is assumed.
[Math. 24]

$$L_2 = \frac{3}{4} \times H \times 5 \qquad \cdots(24)$$

Hence, the relationship between the parallax S and the horizontal screen size H which satisfies the condition "the parallax angle is one degree or less when the observer observes stereoscopic images displayed on the screen whose horizontal screen size is H and whose screen aspect ratio is 4:3 at the position being away from the screen by the distance five times as great as the height of the screen" is as follows.
[Math. 25]

$$S \leq 0.06545H \qquad \cdots(25)$$

Accordingly, it can be seen that, in order for the parallax angle to be one degree or less when the observer observes stereoscopic image displayed on the screen whose screen aspect ratio is 4:3 from the position being away from the screen by the distance five times as great as the height of the screen, the parallax displayed on the screen should approximately be 6.5 percent or less of the horizontal screen size. That is, Condition (1) "does not exceed 2.9%" can be modified to "does not exceed 6.5%".

As described above, with the stereoscopic image capturing apparatus 100 according to the present embodiment, the user can input observation condition information (the size and screen aspect ratio of the screen of the expected display apparatus, the expected observation distance and the like) to the stereoscopic image capturing apparatus 100 via the operation unit 8.

The controller 3 may derive the appropriate subject distance range, taking into consideration of the observation condition information being input for deriving the subject distance satisfying the Condition (1) in Steps S8 and S10. Specifically, the controller 3 may derive the relationship between the parallax and the horizontal screen size with which "the parallax angle being one degree or less" is achieved based on the observation condition information, according to Equations (21) to (25); modify Condition (1) (Equations (5) and (10)) based on the result; and obtain the nearest appropriate subject distance $D_N'$ and the farthest appropriate subject distance $D_{F1}'$ which satisfy the modified Condition (1).

In this manner, the stereoscopic image capturing apparatus 100 can present the appropriate subject distance range when the observer observes a stereoscopic image displayed on the display apparatus having arbitrary screen aspect ratio and screen size at a position being away by an arbitrary distance, to the user capturing the stereoscopic image in real time.

4. Conclusion

The stereoscopic image capturing apparatus 100 according to the present embodiment includes the first image capturing unit 1L capturing a left-eye image, the second image capturing unit 1R capturing a right-eye image, the controller 3, and the display unit 5. The controller 3 can derive the subject distance range satisfying the prescribed conditions for the parallax of the stereoscopic image based on the imaging condition information such as the horizontal angle of view $\omega$, the convergence angle $\theta$, the installation interval dc of the first image capturing unit 1L and the second image capturing unit 1R and the like, to be displayed on the display unit 5. Accordingly, the user can check the subject distance appropriate for capturing a stereoscopic image while capturing the stereoscopic image.

As the embodiment, the stereoscopic image capturing apparatus 100 has exemplarily been shown. However, the embodiment is not limited thereto. In the following, a description will be given of the variation. It is to be noted that the present embodiment is not limited to the stereoscopic image capturing apparatus 100 and the variation thereof, which will be described in the following.

In the embodiment, in deriving the optimum subject distance, what are employed are the conditions in which: the parallax displayed on the screen does not exceed 2.9% of the horizontal screen size; and the parallax displayed on the screen is 50 mm or less with the retracted images. However, the conditions may be variously changed in order to capture more safe and comfortable stereoscopic images, e.g., "the parallax displayed on the screen does not exceed 1.5% of the horizontal screen size".

In the embodiment, in deriving the optimum subject distance, what is used is the information of the horizontal angle of view change instruction (focal length change instruction) and the convergence angle change instruction sent by the controller 3 to the first image capturing unit 1L and the second image capturing unit 1R. However, the controller 3 may obtain the information on the actual horizontal angle of view (focal length) and the information on the convergence angle of the first image capturing unit 1L and the second image capturing unit 1R via the sensors or the like as the camera information, and use the information in deriving the optimum subject distance.

In the embodiment, the example in which the convergence angle is changed by the optical path correction lens 14 has exemplarily been shown. However, the stereoscopic image capturing apparatus 100 may be structured to include a mechanism that deflects the first image capturing unit 1L and the second image capturing unit 1R themselves, in order to change the convergence angle.

In the embodiment, the description has been given of the manner in which, in displaying the appropriate subject distance range, the information on the appropriate subject distance is changed over between the case where the expected screen size is 77 inches or less and the case where the expected screen size exceeds 77 inches. However, it is also possible for the user to freely select the screen size expected as the stereoscopic image display apparatus using the operation unit 8, to change over the displaying of the appropriate subject distance range based on the screen size. In addition, the user may change over the displaying of the appropriate subject distance range based on the aspect ratio of the screen of the expected stereoscopic image display apparatus or the expected distance between the screen and the observer. Further, a plurality of sets of appropriate subject distance ranges may be derived based on a plurality of different pieces of observation condition information, respectively, and they may simultaneously be displayed.

INDUSTRIAL APPLICABILITY

The stereoscopic image capturing apparatus according to the present embodiment can notify the appropriate subject distance, and is useful as a professional-use or household stereoscopic image capturing apparatus.

REFERENCE SIGNS LIST

1L: first image capturing unit
1R: second image capturing unit
2: image processing unit
3: controller
4: distance information overlaying unit
5: display unit

6: memory media control unit
7: memory card
8: operation unit
10: optical system
11: objective lens
12: variable magnification lens (focal length changing unit)
13: diaphragm
14: optical path correction lens (convergence angle changing unit)
15: focus lens
16: image pickup element
17: setting retaining memory
18: driver unit
61: nearest point distance (nearest appropriate subject distance)
62: reference plane distance
63: farthest point distance (farthest appropriate subject distance)
63a: farthest point distance (farthest appropriate subject distance (screen size being 77 inches or less))
63b: farthest point distance (farthest appropriate subject distance (screen size being 78 inches or more))
64: expected display screen information indicator 100: stereoscopic image capturing apparatus

**Claims**

1. A stereoscopic image capturing apparatus which is capable of capturing a stereoscopic image including a left-eye image and a right-eye image, comprising:

   a stereoscopic image imaging unit including a first image capturing unit which is operable to capture the left-eye image and a second image capturing unit which is operable to capture the right-eye image;
   a display unit which is operable to display information; and
   a controller which is operable to control the stereoscopic image imaging unit and the display unit, wherein:

      the controller derives a subject distance that satisfies a prescribed condition for parallax of a subject in the stereoscopic image based on information on a horizontal angle of view and a convergence angle of the stereoscopic image imaging unit; and
      the display unit displays information on the subject distance derived by the controller.

2. The stereoscopic image capturing apparatus according to claim 1, wherein
   the controller derives a nearest distance and a farthest distance of the subject distance satisfying the prescribed condition.

3. The stereoscopic image capturing apparatus according to claim 1 or 2, further comprising
   an operation unit operable to input information on a screen size of a screen on which the stereoscopic image is displayed, wherein
   the controller derives the subject distance based on the information on the screen size, in addition to the horizontal angle of view and the convergence angle.

4. The stereoscopic image capturing apparatus according to any one of claims 1 to 3, further comprising
   an operation unit inputting information on a screen aspect ratio of the screen on which the stereoscopic image is displayed, wherein
   the controller derives the subject distance based on the information on the screen aspect ratio, in addition to the horizontal angle of view and the convergence angle.

5. The stereoscopic image capturing apparatus according to any one of claims 1 to 4, further comprising
   an operation unit operable to input information on an interval between the screen on which the stereoscopic image is displayed and an observer, wherein
   the controller derives the subject distance based on the information on the interval between the screen and the observer, in addition to the horizontal angle of view and the convergence angle.

6. A stereoscopic image capturing method in a stereoscopic image capturing, the stereoscopic image including a left-eye image and a right-eye image, comprising:

capturing the left-eye image and the right-eye image;
deriving a subject distance that satisfies a prescribed condition for parallax of a subject in the stereoscopic image based on information on a horizontal angle of view and a convergence angle of a stereoscopic image imaging unit including a first image capturing unit capturing the left-eye image and a second image capturing unit capturing the right-eye image; and
displaying information on the subject distance derived in the deriving.

*Fig.1*

# Fig.2

FIRST IMAGE CAPTURING UNIT

10

11  12  13  14  15  16

1L

Z

V

H

2

IMAGE
PROCESSING
UNIT

SETTING
RETAINING
MEMORY

DRIVER UNIT

17  18

3

CONTROLLER

EP 2 608 553 A1

*Fig.3*

*Fig.4*

*Fig.5*

# Fig.6

```
                    ( START )

S1 | EXECUTING A PRESCRIBED POWER-SUPPLY-ON PROCESSING

S2 | EXECUTING AN INITIAL CONTROL FOR DRIVING A VARIABLE
     MAGNIFICATION LENS AND AN OPTICAL PATH CORRECTION LENS

S3 | EXECUTING A CONTROL FOR DRIVING THE VARIABLE
     MAGNIFICATION LENS AND THE OPTICAL PATH CORRECTION LENS
```

S4 — IS A ZOOMING OPERATION PERFORMED ? — NO

YES

S5 | EXECUTING A CONTROL FOR DRIVING THE VARIABLE MAGNIFICATION LENS AND THE OPTICAL PATH CORRECTION LENS (ZOOMING OPERATION CONTROL)

S6 — IS A CONVERGENCE ANGLE CHANGING OPERATION PERFORMED ? — NO

YES

S7 | EXECUTING A CONTROL FOR DRIVING THE OPTICAL PATH CORRECTION LENS (CONVERGENCE ANGLE CHANGING CONTROL)

S8 | CALCULATING AN APPROPRIATE SUBJECT DISTANCE RANGE BASED ON THE CURRENT FOCAL LENGTH (ANGLE OF VIEW) AND CONVERGENCE ANGLE

S9 — IS AN OPERATION FOR CHANGING A SCREEN SIZE, A SCREEN ASPECT RATIO, AND EXPECTED OBSERVING DISTANCE PERFORMED ? — NO

YES

S10 | RE-CALCULATING THE APPROPRIATE SUBJECT DISTANCE RANGE

S11 | DISPLAYING THE APPROPRIATE SUBJECT DISTANCE RANGE

S12 — IS A POWER-SUPPLY-OFF OPERATION PERFORMED ?

NO

YES

S13 | STORING CURRENT POSITIONS OF THE VARIABLE MAGNIFICATION LENS AND THE OPTICAL PATH CORRECTION LENS

( END )

EP 2 608 553 A1

# Fig.7

SUBJECT IMAGE
50

DISPLAY UNIT
5

1.1m ～ 8.0m

63
FARTHEST POINT DISTANCE

61
NEAREST POINT DISTANCE

# Fig.8

SUBJECT IMAGE
50

DISPLAY UNIT
5

3D

1.1m ～ 8.0m

63
FARTHEST POINT DISTANCE

61
NEAREST POINT DISTANCE

64
EXPECTED DISPLAY SCREEN
INFORMATION INDICATOR

EP 2 608 553 A1

# Fig.9

SUBJECT IMAGE
50

DISPLAY UNIT
5

1    2    4    8    16    32    64    ∞    m

61
NEAREST POINT
DISTANCE

62
REFERENCE PLANE
DISTANCE

63a
FARTHEST POINT DISTANCE
(200 INCHES)

63b
FARTHEST POINT DISTANCE
(77 INCHES OR LESS)

EP 2 608 553 A1

*Fig.10*

*Fig.11*

## INTERNATIONAL SEARCH REPORT

| | International application No. |
|---|---|
| | PCT/JP2010/007556 |

A. CLASSIFICATION OF SUBJECT MATTER
*H04N13/02*(2006.01)i, *G02B7/28*(2006.01)i, *G02B7/30*(2006.01)i, *G03B17/18*
(2006.01)i, *G03B35/08*(2006.01)i

According to International Patent Classification (IPC) or to both national classification and IPC

B. FIELDS SEARCHED

Minimum documentation searched (classification system followed by classification symbols)
H04N13/00-15/00, G02B7/28, G02B7/30, G03B17/18, G03B35/08

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-205758 A  (Fujifilm Corp.),<br>04 September 2008 (04.09.2008),<br>paragraphs [0019] to [0077]; fig. 13 to 14, 16, 18<br>& US 2008/0199046 A1 | 1-6 |
| A | JP 2005-167310 A  (Sharp Corp.),<br>23 June 2005 (23.06.2005),<br>abstract; paragraphs [0024] to [0034]; fig. 1 to 5<br>(Family: none) | 1-6 |
| A | JP 2006-287811 A  (Daisuke OMORI),<br>19 October 2006 (19.10.2006),<br>paragraphs [0011], [0027]; fig. 1 to 3<br>(Family: none) | 1-6 |

[X] Further documents are listed in the continuation of Box C.     [ ]  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 March, 2011 (16.03.11) | 29 March, 2011 (29.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/007556

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-295361 A (Casio Computer Co., Ltd.), 20 October 2005 (20.10.2005), paragraphs [0031] to [0039]; fig. 7 (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010103895 A